# EUROPÄISCHE PATENTSCHRIFT

(11) **EP 1 962 042 B1**
(45) Veröffentlichungstag und Bekanntmachung des Hinweises auf die Patenterteilung: **17.10.2012**
(21) Anmeldenummer: 08003148.7
(22) Anmeldetag: 20.02.2008
(51) Int. Cl.: F28D 20/00, F28F 27/00, F28D 7/02, F28D 7/10, F28D 7/16

(54) **Druckgesteuerter Wärmetauscher sowie Verfahren zum dosierten Wärmeaustausch**
Pressure controlled heat exchanger and method for metered heat exchange
Echangeur thermique commandé par pression et procédé d'échange thermique dosé

(30) Priorität: 21.02.2007 DE 102007008472
(43) Veröffentlichungstag der Anmeldung: 27.08.2008
(73) Patentinhaber: Erb, Heiko, 71570 Oppenweiler (DE); Meyer, Daniel, 71522 Backnang (DE)
(72) Erfinder: Erb, Heiko, 71570 Oppenweiler (DE); Meyer, Daniel, 71522 Backnang (DE)
(74) Vertreter: Manitz, Finsterwald & Partner GbR

(56) Entgegenhaltungen:
- DE-A1- 2 228 444
- DE-A1- 2 758 727
- FR-A- 2 811 744
- GB-A- 382 830

## Beschreibung

Die vorliegende Erfindung betrifft einen druckgesteuerten Wärmetauscher, mit welchem sich Wärmeenergie insbesondere gezielt und dosiert von einem Quellmedium auf ein Zielmedium übertragen lässt. Darüber hinaus betrifft die Erfindung ein Verfahren, mit dem sich Wärmeenergie insbesondere gezielt und dosiert von einem Quellmedium auf ein Zielmedium bei Bedarf übertragen lässt.

Herkömmliche Heizungsanlagen unter Verwendung fossiler Brennstoffe wie beispielsweise Öl oder Gas arbeiten in aller Regel derart, dass ein Brenner jeweils bei Bedarf das Heiz- oder Brauchwasser erwärmt, was dazu führt, dass der Brenner verhältnismäßig oft an- und abgeschaltet wird, da der Brenner die Wärmeenergie gewissermaßen "just in time" zur Verfügung stellt. Bedingt durch diese häufigen Schaltvorgänge sowie die damit verbundenen, entsprechend kurzen Brennintervalle, werden jedoch die fossilen Brennstoffe wie beispielsweise Öl oder Gas nicht vollständig verbrannt, was sich in umwelttechnischer Hinsicht aufgrund erhöhter Abgaswerte als nachteilig erweist. Darüber hinaus führen häufige Schaltvorgänge und kurze Brennintervalle zur Versottung und Verschlackung des Brenners, was ebenfalls unerwünscht ist.

Die häufigen und verhältnismäßig kurzen Schaltintervalle werden bei herkömmlichen Heizungsanlagen dadurch verursacht, dass der Brenner jeweils nur bei Bedarf anspringt, da üblicherweise keine Vorkehrungen getroffen werden, um überschüssige, von dem Brenner zur Verfügung gestellte Wärmeenergie speichern und bei Bedarf gezielt und dosiert abgeben zu können, da eine Wärmespeicherung mit Energieverlusten verbunden ist.

Ähnliche Probleme treten beispielsweise auch bei Fotovoltaikanlagen auf. So stellen nämlich Fotovoltaikanlagen an sonnenreichen Tagen in aller Regel mehr elektrische Energie zur Verfügung als aktuell benötigt wird, weshalb die überschüssige Energie häufig in das öffentliche Stromversorgungsnetz eingespeist wird. Die Einspeisung in das öffentliche Stromversorgungsnetz ließe sich jedoch umgehen, wenn sich die von einer Fotovoltaikanlage erzeugte elektrische Energie in Form von Wärmeenergie effizient zwischenspeichern ließe, so dass sie bei Bedarf gezielt und dosiert wieder abgegeben werden kann. Eine derartige Zwischenspeicherung ist beispielsweise mit dem in der GB 382,830 A beschriebenen Wärmespeichersystem möglich, bei dem sich ein in einem Behälter befindliches flüssiges Wärmespeichermedium durch eine Pegeländerung mit einer ein Fluid führenden Rohrwendel in Wärmeleitbeziehung bringen lässt. Mit diesem System lassen sich jedoch keine unterschiedlichen Wärmeübertragungsraten auf das Zielmedium sicherstellen.

Eine Zwischenspeicherung von Wärmeenergie ist auch mit der in der DE 22 28 444 A1 beschriebenen Heizvorrichtung möglich, bei der ein Wärmespeichermedium von einem evakuierbarem Doppelmantel umgeben ist, wobei durch Druckänderung in dem Doppelmantel die von dem Wärmespeichermedium gespeicherte Wärme dosiert, jedoch unwiederbringbar an die Umgebung abgegeben wird.

Der vorliegenden Erfindung liegt daher die Aufgabe zugrunde, eine Realisierung anzugeben, mit welcher sich Wärmeenergie speichern und bedarfsgerecht, insbesondere dosiert abgeben lässt.

Die der Erfindung zu Grunde liegende Aufgabe wird mit einem druckgesteuerten Wärmetauscher mit den Merkmalen des Anspruchs 1 gelöst. Ferner löst das erfindungsgemäße Verfahren mit den Merkmalen des Anspruchs 23 die der Erfindung zu Grunde liegende Aufgabe.

Der erfindungsgemäße Wärmetauscher weist ein Quellmedium und ein Zielmedium auf, wobei sich sowohl das Quellmedium als auch das Zielmedium in einem zumindest teilweise evakuierbaren ersten Raum befinden. Der erste Raum ist mit einem Arbeitsgas, wie beispielsweise Luft oder einem schweren Gas wie beispielsweise Argon oder auch einem Mischgas, gefüllt. Um die Wärmeübertragung von dem Quellmedium auf das Zielmedium beeinflussen zu können, ist der Innendruck des ersten Raums von einem ersten Druckwert zu einem zweiten Druckwert überführbar, womit die Wärmeübertragung von dem Quellmedium zu dem Zielmedium in Abhängigkeit von dem Innendruck variiert. Sofern im Rahmen der vorliegenden Erfindung davon die Rede ist, dass ein Druck von einem Druckwert zu einem anderen Druckwert überführbar ist, so bedeutet dies nicht, dass es sich um fest vorgegebene Druckwerte handelt. Vielmehr sind die Druckwerte als Systemparameter im Rahmen gewisser Grenzen frei wählbar, um die Wärmeübertragung von dem Quellmedium auf das Zielmedium zu steuern. Durch die Tatsache, dass ein Druck von einem Druckwert zu einem anderen Druckwert überführbar ist, soll somit vielmehr zum Ausdruck kommen, dass die Wärmeübertragung von dem Quellmedium auf das Zielmedium druckabhängig einstellbar ist.

Die vorliegende Erfindung macht sich zunutze, dass Wärmeübertragung mittels Konvektion und/ oder Wärmeleitung die Anwesenheit von Materie voraussetzt. Dementsprechend wird die Wärmeübertragung von dem Quellmedium zu dem Zielmedium mit abnehmendem Druck in dem ersten Raum geringer und kommt zum Erliegen, wenn das Arbeitsgas aus dem ersten Raum vollständig evakuiert wurde. Insbesondere wird dabei auf die Erkenntnis zurückgegriffen, dass bei einem sehr geringen Gasdruck, wenn also die mittlerer freie Weglänge der an der Wärmeübertragung teilnehmenden Moleküle groß wird, die Wärmestromdichte infolge Wärmeleitung proportional zum Gasdruck ist. Im Zustand, wenn also der erste Raum vollständig evakuiert ist, ist die von dem Quellmedium ausgehende Wärmeübertragung durch Konvektion und Wärmeleitung somit vollständig unterbrochen, so dass das Quellmedium als idealer Wärmespeicher dient, wenn keine Wärmeübertragung von dem Quellmedium auf das Zielmedium erforderlich oder wünschenswert ist. Besteht jedoch zu einem späteren Zeitpunkt ein Bedarf danach, die Temperatur des Zielmediums anzuheben, so lässt sich die zumindest teilweise Evakuierung des ersten Raums wieder wenigstens zum Teil rückgängig machen, so dass der Wärmetransport mittels Konvektion und/oder Wärmeleitung von dem Quellmedium zu dem Zielmedium wieder einsetzt. Hierbei kann die Wärmeübertragungsrate von dem Quellmedium zu dem Zielmedium gezielt dadurch eingestellt werden, dass der Innendruck des ersten Raums gezielt eingestellt wird. Somit lässt sich durch Verändern des Innendrucks des ersten Raums die Wärmeübertragungsrate von dem Quellmedium auf das Zielmedium beeinflussen und eine exakte Temperaturregelung über die Über- bzw. Unterdruckstärke in dem ersten Raum erzielen.

Zwar ist es wünschenswert, den ersten Raum, in dem sich das Quellmedium und das Zielmedium befinden, möglichst vollständig zu evakuieren, um die Wärmeübertragung von dem Quellmedium auf das Zielmedium mittels Konvektion und/oder Wärmeleitung vollständig zu unterbrechen. Gute Ergebnisse werden jedoch bereits erzielt, wenn der Druck in dem ersten Raum auf etwa 100 mbar abgesenkt wird, wobei auch eine Druckabsenkung auf etwa 400 mbar ausreichend sein kann, damit die Wärmeübertragung weitestgehend zum Erliegen kommt.

Um eine kontinuierliche Wärmeübertragung von dem Quellmedium auf das Zielmedium durch Wärmestrahlung weitestgehend zu unterbinden, ist in einem Ausführungsbeispiel das Quellmedium in einer wärmeisolierten Kammer angeordnet, welche ausgebildet ist, um die Übertragung von Wärme- bzw. Infrarotstrahlung von dem Quellmedium auf das Zielmedium zu verhindern. Um jedoch bei Bedarf die Wärmeübertragung mittels Konvektion und/oder Wärmeleitung zu ermöglichen, weist die Kammer zumindest eine Öffnung auf, durch welche ein Wärmeaustausch zwischen dem Quellmedium und dem Zielmedium durch Konvektion und/oder Wärmeleitung bei Bedarf sichergestellt werden kann.

Damit durch die zumindest eine Öffnung jedoch keine Wärmestrahlung austreten kann, ist gemäß einer Weiterbildung im Bereich der Öffnung ein Spiegel vorgesehen, welcher derart angeordnet und ausgebildet ist, dass die von dem Quellmedium abgegebene Wärmestrahlung durch die Öffnung hindurch zurück in die Kammer reflektiert wird. Bei den Spiegeln kann es sich beispielsweise um Parabolspiegel aus hitzebeständigem Stahl oder Keramik handeln, um die durch die zumindest eine Öffnung austretende Wärmestrahlung effektiv, da gebündelt, zurück in die Kammer reflektieren zu können. Der Spiegel ist dabei beabstandet zu der Öffnung in der Kammer angeordnet, so dass die Wärmeübertragung durch Konvektion und/oder Wärmeleitung durch den Spiegel nicht beeinträchtigt wird.

Bei dem Quellmedium kann es sich beispielsweise um eine Vergussmasse oder einen Speicherstein wie beispielsweise einen Feolite-Speicherkern handeln, mit der die Kammer vergossen bzw. ausgefüllt ist. Um den Vergussvorgang zu erleichtern und gleichzeitig das Quellmedium mit einer möglichst großen Oberfläche zum Wärmeaustausch auszustatten, kann die Kammer mit einer Vielzahl an Rohren durchsetzt sein, welche durch die genannte(n) Öffnung(en) der Kammer in den ersten Raum münden. Die Rohre stehen dabei mit dem Quellmedium in Wärmetauschbeziehung, so dass durch die Rohrwandungen hindurch die Wärmeübertragung über das in den Rohren und in dem ersten Raum befindliche Arbeitsmedium auf das Zielmedium insbesondere über Konvektion und/oder Wärmeleitung erfolgen kann.

Um zu gewährleisten, dass die das Quellmedium aufnehmende Kammer ihrerseits nicht selbst infolge einer Erwärmung durch das Quellmedium Wärmestrahlung abgibt, kann die Kammer durch eine nach innen verspiegelte Außenwandung begrenzt sein, wobei zwischen der Außenwandung und dem Quellmedium eine Wärmedämmschicht angeordnet ist.

Innerhalb der Dämmschicht fällt dabei die von dem Quellmedium ausgehende Temperaturlast auf einen zu vernachlässigenden Wert ab, womit dem Problem der Wärmeleitung auf die Außenwandung der Kammer und von dort in den ersten Raum entgegengewirkt werden kann. Die Innenverspiegelung der Außenwandung bewirkt andererseits, dass keine Wärmeenergie in Form von Infrarotstrahlung von der Kammer abgegeben werden kann.

Gemäß einer besonderen Ausführungsform kann die Wärmedämmschicht der Kammer zwischen der Außenwandung und einer Innenwandung angeordnet sein, welche ihrerseits mit dem Quellmedium in direktem Kontakt steht. Bei dieser Ausführungsform weist die Kammer somit also einen doppelwandigen Kammermantel mit einer innenliegenden Wärmedämmschicht auf, wobei die Wärmedämmschicht durch die Innenwandung vor direktem Kontakt mit dem Quellmedium und somit vor Beschädigungen geschützt wird.

Um während eines Heizintervalls möglichst viel Energie in Form von Wärme in dem Quellmedium einlagern bzw. darin speichern zu können, handelt es sich bei dem Quellmedium um ein Material, welches sich auf mehrere 100°C, insbesondere auf 850°C und mehr zerstörungsfrei erhitzen lässt. Beispielsweise kann es sich bei dem Material, aus dem das Quellmedium besteht, um einen Speicherstein wie beispielsweise einen Feolite-Speicherkern handeln, welcher erst ab etwa 900°C in den flüssigen Zustand übergeht.

Um auch den ersten Raum, in dem sich das Quellmedium und das Zielmedium befinden, gegen Wärmeverluste zu isolieren, kann auch der erste Raum durch eine nach innen verspiegelte Außenwandung begrenzt sein, welche innenseitig mit einer Wärmedämmschicht versehen ist. Auf diese Weise wird entsprechend der Außenwandung der Kammer, in der sich das Quellmedium befindet, eine Wärmeübertragung auf die Außenwandung des ersten Raums auf einen zu vernachlässigenden Wert abgesenkt. Darüber hinaus bewirkt die Verspiegelung der Außenwandung, dass in dem ersten Raum entstehende Wärmestrahlung in den ersten Raum zurück und vorzugsweise auf das Zielmedium reflektiert wird.

Um das Zielmedium für einen Verbraucher nutzbar machen zu können, kann es sich bei dem Zielmedium z.B. um ein Fluid wie beispielsweise Wasser handeln, welches - z.B. durch wenigstens einen ersten Rohrabschnitt - durch den ersten Raum hindurch geleitet wird. Das Zielmedium in Form eines Fluids kann auf diese Weise einem Verbraucher wie beispielsweise einer Warmwasserheizung oder einem Warmwasserspeicher für die Brauchwasserversorgung zur Verfügung gestellt werden, wobei beispielsweise durch Variation der Durchflussgeschwindigkeit des Zielmediums der Wärmeenergieeintrag in das Zielmedium und somit die Temperatur der Warmwasserheizung oder der Brauchwasserversorgung gezielt eingestellt werden kann.

Gemäß einem Aspekt der vorliegenden Erfindung kann der erste Rohrabschnitt gewendelt um die das Quellmedium aufnehmende Kammer herumgeführt sein. In diesem Falle weist die Kammer vorzugsweise eine zylindrische Gestalt auf, um die die Rohrwendel konzentrisch herumgeführt ist. Auf diese Weise lässt sich einerseits eine kompakte Bauweise des Wärmetauschers erreichen. Andererseits kann dadurch, dass der erste Rohrabschnitt gewendelt um die das Quellmedium aufnehmende Kammer herumgeführt ist, die Länge des ersten Rohrabschnitts ausgedehnt werden, ohne dass gleichzeitig der erste Raum vergrößert werden muss. Die Ausdehnung der Länge des ersten Rohrabschnitts ist dabei wünschenswert, da so mehr Oberfläche zur Wärmeübertragung vom Quellmedium auf das Zielmedium zur Verfügung steht, womit bereits relativ geringe Temperaturunterschiede ausreichen, um das Zielmedium rasch auf einen gewünschten Temperaturzielwert erwärmen zu können.

Entsprechend der das Quellmedium aufnehmenden Kammer kann auch der erste Raum eine zylindrische Gestalt aufweisen, wobei die Kammer vorzugsweise konzentrisch zur Außenwandung des ersten Raumes in diesem angeordnet ist. Es erstrecken sich somit die Außenwandung der Kammer sowie die Außenwandung des ersten Raums einschließlich der Rohrwendel des ersten Rohrabschnitts konzentrisch zueinander, womit sich eine besonders kompakte Bauform des Wärmetauschers erreichen lässt. Durch die genannte konzentrische Anordnung lässt sich darüber hinaus das Volumen des ersten Raums verringern, womit das Ansprechverhalten der Wärmeübertragung vom Quellmedium auf das Zielmedium insbesondere durch Konvektion und/oder Wärmeleitung verbessert werden kann.

Darüber hinaus kann der erste Rohrabschnitt eine schwarze Oberfläche aufweisen, um die Wärmeübertragung auf das Zielmedium noch weiter zu verbessern.

Wie bereits erläutert wurde, erfolgt die Wärmeübertragung von dem Quellmedium auf das Zielmedium dadurch, dass in dem ersten Raum gezielt ein Arbeitsmedium, in Form von Arbeitsgas, unter Druck gesetzt wird, um somit die Wärmeübertragung durch Konvektion und/oder Wärmeleitung zu ermöglichen. Bei dieser Wärmeübertragung erwärmt sich jedoch nicht nur das Zielmedium, sondern systembedingt auch das Arbeitsmedium, weshalb es wünschenswert ist, die Wärmeenergie, die in das Arbeitsmedium eingebracht wurde, bei dem Wärmeübertragungsvorgang mit Hilfe des erfindungsgemäßen Wärmetauschers weiter nutzen zu können.

Dementsprechend umfasst der erfindungsgemäße Wärmetauscher in einer Ausführungsform ferner einen zumindest teilweise evakuierbaren zweiten Raum, welcher mit dem ersten Raum in kommunizierender Verbindung steht, so dass infolge einer Druckänderung in dem ersten Raum der Innendruck des zweiten Raums von einem dritten Druckwert zu einem vierten Druckwert überführbar ist. Mit anderen Worten steht der zweite Raum derart in kommunizierender Verbindung mit dem ersten Raum, dass, wenn der erste Raum evakuiert wird, der zweite Raum mit dem aus dem ersten Raum evakuierten Arbeitsmedium beaufschlagt wird, beziehungsweise, wenn der zweite Raum evakuiert wird, dass dann der erste Raum mit dem aus dem zweiten Raum evakuierten Arbeitsmedium beaufschlagt und somit unter Druck gesetzt wird. Auf diese Weise kann das zuvor erwärmte Arbeitsmedium aus dem ersten Raum in den zweiten Raum überführt werden, so dass es dort zur Verfügung steht, um beispielsweise das Zielmedium vor der eigentlichen Erwärmung, die in dem ersten Raum erfolgt, vorzuwärmen.

Dementsprechend erstreckt sich in einem Ausführungsbeispiel durch den zweiten Raum ein mit dem ersten Rohrabschnitt in kommunizierender Verbindung stehender zweiter Rohrabschnitt, so dass das Zielmedium in dem zweiten Raum mittels des zuvor erwärmten Arbeitsmediums vortemperiert werden kann. Eine derartige Vortemperierung des Zielmediums erweist sich dahingehend als vorteilhaft, dass weniger Energie erforderlich ist, um das Zielmedium in dem ersten Raum bis zu einem vorgegebenen Zielwert zu erwärmen, womit dem Quellmedium weniger Wärme entzogen wird.

Insgesamt erweist sich somit die Vortemperierung des Zielmediums in einem mit dem ersten Raum in kommunizierender Verbindung stehenden zweiten Raum in energiewirtschaftlicher Hinsicht als vorteilhaft. Darüber hinaus geht dadurch, dass der zweite Raum mit dem ersten Raum in kommunizierender Verbindung steht, das Arbeitsmedium nicht verloren, was insbesondere dann von Vorteil ist, wenn es sich bei dem Arbeitsmedium um ein verhältnismäßig kostenintensives Gas wie beispielsweise Argon handelt.

Gemäß einem weiteren Aspekt der vorliegenden Erfindung kann der erste Raum in dem zweiten Raum angeordnet sein. Durch eine derartige Anordnung der beiden Räume lässt sich eine vorteilhafte Wechselwirkung zwischen den beiden Räumen erzielen. So isoliert beispielsweise der äußere zweite Raum den inneren ersten Raum in idealer Weise ab, wenn sich das Arbeitsmedium in dem ersten Raum befindet und der zweite äußere Raum folglich zumindest teilweise evakuiert ist. Befindet sich andererseits das Arbeitsmedium in dem zweiten, außen liegenden Raum, so isoliert der dementsprechend zumindest teilweise evakuierte erste Raum die darin befindliche Kammer und somit das Quellmedium, so dass von dem Quellmedium keine Wärmeverluste ausgehen.

Um eine kompakte Bauform und eine möglichst große Oberfläche für den Wärmeeintrag in das Zielmedium in dem zweiten Raum zu gewährleisten, kann der zweite Rohrabschnitt gewendelt um den ersten Raum herumgeführt sein, wobei die Wendel des zweiten Rohrabschnitts vorzugsweise konzentrisch um den ersten Raum herumgeführt ist. Darüber hinaus kann der zweite Rohrabschnitt entsprechend dem ersten Rohrabschnitt ebenfalls eine schwarze Oberfläche aufweisen, um sein Wärmeabsorptionsverhalten zu verbessern.

Um eine möglichst kompakte Bauform des Wärmetauschers sicherzustellen, kann der zweite Raum ebenfalls eine zylindrische Gestalt aufweisen, wobei der erste Raum vorzugsweise konzentrisch zur Außenwandung des zweiten Raums in diesem angeordnet ist. Dadurch, dass der zweite Raum qualitativ die gleiche Gestalt aufweist wie der erste Raum, lässt sich darüber hinaus eine Minimierung des Volumens des zweiten Raums erzielen, so dass das im ersten Raum vorerwärmte Arbeitsmedium in dem zweiten Raum mit einer möglichst hohen Energiedichte zur Vortemperierung des Zielmediums vorliegt.

Um etwaige Wärmeenergieverluste aus dem zweiten Raum zu reduzieren, kann die den zweiten Raum definierende Außenwandung mit einer Wärmedämmschicht versehen sein, wobei es in diesem Fall zwar möglich, aber nicht zwingend erforderlich ist, eine zusätzliche Verspiegelung vorzusehen, da in dem zweiten Raum nur verhältnismäßig geringe Temperaturen herrschen, so dass Verluste durch Wärmestrahlung vernachlässigt werden können.

Um eine Druckverlagerung zwischen dem ersten Raum und dem zweiten Raum, also eine Druckänderung in dem einen Raum unter gleichzeitiger, entgegengesetzt gerichteter Druckänderung in dem anderen Raum, zur Änderung der Wärmeübertragungsrate von dem Quellmedium auf das Zielmedium herbeiführen zu können, kann der erste Raum mit dem zweiten Raum über ein Rohrsystem in kommunizierender Verbindung stehen, welches zumindest eine Pumpe aufweist, um das Arbeitsmedium aus dem einen in den anderen Raum zu fördern. Darüber hinaus kann das Rohrsystem ein Druckausgleichsventil aufweisen, welches im geöffneten Zustand ermöglicht, dass sich selbsttätig ein Druckausgleich zwischen dem ersten Raum und dem zweiten Raum einstellt. Durch die Betätigung des Druckausgleichsventils reicht es daher aus, die Pumpe erst dann einzuschalten, wenn sich ein Druckausgleich zwischen den beiden Räumen eingestellt hat, um dann anschließend ausgehend von dem Gleichgewichtszustand den Druck in dem einen Raum zu verringern und dementsprechend den Druck in dem anderen Raum zu erhöhen.

Um in dem Quellmedium zur Energiespeicherung Wärmeenergie einlagern zu können, kann in das Quellmedium oder in der Nähe des Quellmediums zumindest ein Heizrohr einmünden, über welches sich dem Quellmedium Wärmeenergie zuführen lässt. Das Heizrohr kann beispielsweise aus einem hitzebeständigen Stahl gefertigt sein, so dass sich die von einer Brennerflamme erzeugte Hitze über das Heizrohr direkt in das Quellmedium einbringen lässt. Alternativ kann das Heizrohr auch eine Heizwendel umfassen, mit der sich beispielsweise überschüssige elektrische Energie einer Fotovoltaikanlage in Wärme umwandeln und direkt in das Quellmedium einbringen lässt.

Um einen kontrollierten Betrieb des Wärmetauschers sicherstellen zu können, kann der Wärmetauscher ferner eine Steuerung umfassen, welche eingerichtet ist, um die Temperatur des Quellmediums und/oder die Temperatur des Zielmediums zu überwachen. Darüber hinaus kann die Steuerung eingerichtet sein, um die jeweils in dem ersten und dem zweiten Raum herrschenden Drücke zu überwachen und zu steuern. Außerdem kann die Steuerung eingerichtet sein, um die Durchflussgeschwindigkeit des Zielmediums durch den ersten und den zweiten Rohrabschnitt zu variieren.

Im Folgenden wird auf ein erfindungsgemäßes Verfahren zum gezielten und dosierten Übertragen von Wärmeenergie von einem Quellmedium auf ein Zielmedium eingegangen. An dieser Stelle sei erwähnt, dass sich sämtliche in Bezug auf den erfindungsgemäßen Wärmetauscher zuvor beschriebenen Aspekte und Merkmale in analoger Weise auf das erfindungsgemäße Verfahren übertragen lassen.

Bei dem erfindungsgemäßen Verfahren wird ein Quellmedium auf einen Zielwert erwärmt. Um einen gezielten und dosierten Wärmeübertrag von dem Quellmedium auf ein Zielmedium sicherzustellen, wird der Druck, welcher in einem ersten Raum herrscht, in dem sich das Quellmedium und das Zielmedium befinden, derart gesteuert, dass in Abhängigkeit von dem jeweils herrschenden Druck die Wärmeübertragung von dem Quellmedium auf das Zielmedium insbesondere durch Konvektion und/oder Wärmeleitung variiert wird. Wenn also der Druck in dem ersten Raum verringert wird, führt dies dazu, dass für die Wärmeübertragung durch Konvektion und/oder Wärmeleitung in dem ersten Raum weniger Moleküle zur Verfügung stehen, so dass dementsprechend die Wärmeübertragung von dem Quellmedium auf das Zielmedium abnimmt. Wird andererseits der Druck in dem ersten Raum derart gesteuert, dass der Druck und damit die Anzahl der in dem ersten Raum vorhandenen Moleküle zunimmt, so führt dies dazu, dass die Wärmeübertragung zunimmt.

Gemäß einem besonderen Aspekt des erfindungsgemäßen Verfahrens erfolgt das Verringern des Drucks in dem ersten Raum dabei derart, dass gleichzeitig der Druck in einem mit dem ersten Raum in kommunizierender Verbindung stehenden zweiten Raum erhöht wird. Entsprechend erfolgt das Erhöhen des Drucks in dem ersten Raum, indem der Druck in dem zweiten Raum verringert wird. Die gegenläufige Druckänderung in den beiden Räumen erweist sich dahingehend als vorteilhaft, dass bis zu einem Druckausgleichszustand zwischen den beiden Räumen die gegenläufige Druckänderung der beiden Räume selbsttätig vonstatten gehen kann. Sobald ein derartiger Druckausgleichszustand erzielt ist, kann mit Hilfe einer Pumpe der Druck in dem einen Raum reduziert und gleichzeitig der Druck in dem anderen Raum erhöht werden.

Um das Zielmedium einem Verbraucher wie beispielsweise einer Warmwasserheizung oder einen Warmwasserspeicher für die Brauchwasserversorgung zur Verfügung stellen zu können, kann das Zielmedium durch den ersten und durch den zweiten Raum hindurchgeleitet werden. Auf diese Weise erfolgt eine kontinuierliche Erwärmung des Zielmediums, so dass eine kontinuierliche Versorgung eines Wärmeverbrauchers sichergestellt werden kann.

Gemäß einem weiteren Aspekt des erfindungsgemäßen Verfahrens erfolgt eine Vortemperierung des Zielmediums in dem zweiten Raum, indem das insbesondere durch Konvektion und/oder Wärmeleitung mittels des Quellmediums erwärmte Arbeitsmedium nicht etwa aus dem System entfernt, sondern aus dem ersten Raum in den zweiten Raum überführt wird. Bevor das Zielmedium in den ersten Raum eintritt, weist es somit bereits eine erhöhte, aus dem zweiten Raum kommende Ausgangstemperatur auf, so dass dem Quellmedium weniger Energie entzogen wird, um das Zielmedium in dem ersten Raum auf einen Zieltemperaturwert zu erwärmen.

Der erfindungsgemäße Wärmetauscher erweist sich durch seine wartungsarme Bauweise als störungsunanfällig, da innerhalb des Wärmetauschers keine mechanisch beweglichen Teile oder elektronischen Komponenten vorgesehen sind. Vielmehr befindet sich die Steuerung des Wärmetauschers bevorzugt außerhalb des zweiten Raums, so dass sie für Wartungszwecke leicht zugänglich ist. Darüber hinaus können die Verbindungsstellen der wärmeführenden Komponenten des Wärmetauschers geschweißt oder hartgelötet werden, womit sich die Anzahl mechanisch anfälliger Komponenten reduziert.

Ferner erweist sich der erfindungsgemäße Wärmetauscher hinsichtlich seiner Verwendbarkeit als sehr flexibel, da die zum Aufheizen erforderliche Beaufschlagung des Quellmediums mit Wärmeenergie unabhängig von der jeweiligen Wärmeenergiequelle ist. So kann das Quellmedium beispielsweise elektrisch über eine Heizwendel mit Wärmeenergie und/oder auch konventionell über fossile Brennstoffe wie beispielsweise Gas oder Öl mit Wärmeenergie gespeist werden.

Wenn das Quellmedium mittels fossiler Brennstoffe erhitzt wird, lassen sich systembedingt längere Brennerschaltintervalle und damit eine vollständigere Verbrennung der fossilen Brennstoffe mit niedrigeren Abgaswerten erzielen. Dadurch, dass die in das Quellmedium eingespeiste Wärmeenergie infolge der Drucksteuerung des Wärmetauschers konserviert werden kann, lässt sich die Häufigkeit der Brennerschaltvorgänge reduzieren, was auch eine Reduzierung des damit verbunden Geräuschpegels mit sich bringt. Der erfindungsgemäße Wärmetauscher arbeitet somit gewissermaßen nach einem "Akkuprinzip", da der Wärmetauscher, wenn er einmal mit Wärmeenergie vollständig "aufgeladen" ist, die gespeicherte Wärmeenergie ratenweise wieder bei Bedarf abgeben kann. Mit anderen Worten handelt es sich bei der Erfindung somit gewissermaßen um eine Kombination aus einem Wärmespeicher und einem Wärmetauscher.

Fernerhin bringt die kompakte Bauweise des Wärmetauschers eine höhere Energiedichte mit sich, so dass im Vergleich zu einem herkömmlichen Heizungssystem weniger Stellfläche erforderlich ist.

Die Vorzüge des erfindungsgemäßen Wärmetauschers treten insbesondere beim Vergleich mit einem herkömmlichen Warmwasser-Speichersystem in Erscheinung. So können herkömmliche Warmwasser-Speichersysteme je nach Bauweise lediglich Wasser mit einer Maximaltemperatur von bis zu 140°C speichern, so dass nur eine Wärmedifferenz von etwa maximal 100°C beispielsweise zur Brauchwasserversorgung zur Verfügung steht. Der erfindungsgemäße Wärmetauscher hingegen ist aufgrund seines speziellen Aufbaus in der Lage, Temperaturen von mehreren 100°C und insbesondere 850°C und mehr dauerhaft zu speichern, so dass nicht nur die speicherbare Energiemenge sondern auch die nutzbare Wärmedifferenz wesentlich höher ist. Dementsprechend lassen sich im Vergleich zu herkömmlichen Warmwasser-Speichersystemen kompaktere und kleinbauendere Anlagen realisieren.

Im Folgenden wird die vorliegende Erfindung anhand eines exemplarischen Ausführungsbeispiels unter Bezugnahme auf die beigefügten Figuren beschrieben.
- Fig. 1: zeigt einen Längsschnitt durch einen erfindungsgemäßen Wärmetauscher einschließlich eines Rohrsystems zur Drucksteuerung; und
- Fig. 2: zeigt das Detail "A" der Fig. 1 in einer vergrößerten Darstellung.

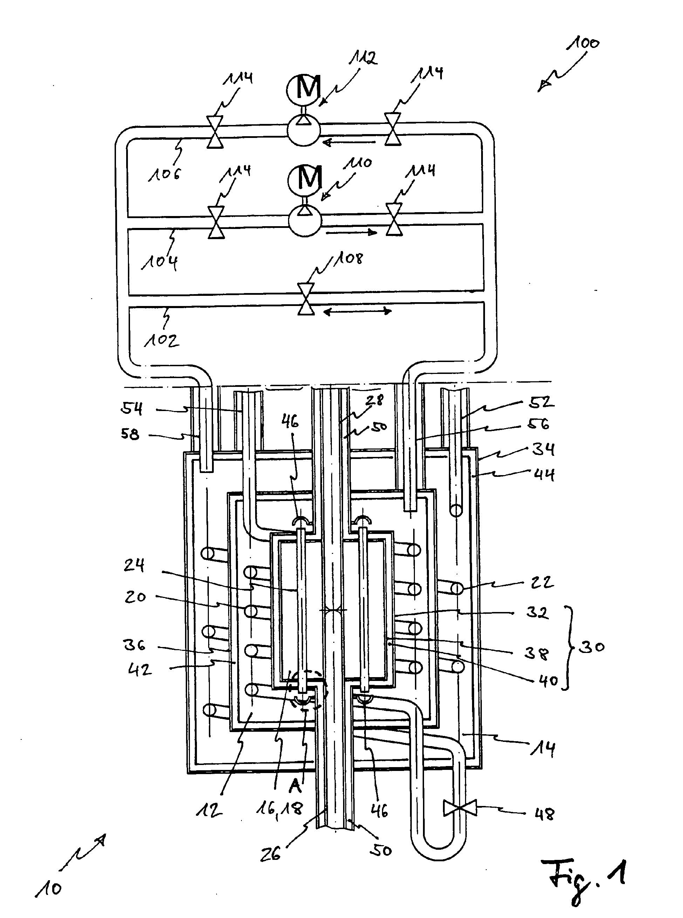

Die Fig. 1 zeigt im unteren Abschnitt den erfindungsgemäßen Wärmetauscher 10 und im oberen Abschnitt ein Rohrsystem 100, mit dem sich die Drucksteuerung des Wärmetauschers 10 realisieren lässt.

Der Wärmetauscher 10 umfasst eine ein Quellmedium 18 aufnehmende Kammer 16, welche ihrerseits in einem ersten Raum 12 angeordnet ist. Der erste Raum 12 befindet sich seinerseits wiederum in einem zweiten Raum 14. In der dargestellten Ausführungsform weist sowohl die Kammer 16 als auch der erste Raum 12 und der zweite Raum 14 eine zylindrische Gestalt auf, wobei die Kammer 16 konzentrisch zum ersten Raum 12 angeordnet ist, welcher seinerseits wiederum konzentrisch in dem zweiten Raum 14 angeordnet ist.

Die Kammer 16 weist einen doppelwandigen Kammermantel 30 mit einer Innenwandung 38 und einer Außenwandung 32 auf, wobei die Außenwandung 32 nach innen verspiegelt ist. Ferner ist zwischen der Außenwandung 32 und der Innenwandung 38 eine Wärmedämmschicht 40 angeordnet. Der erste Raum 12 ist durch eine nach innen verspiegelte Außenwandung 36 definiert, welche innenseitig mit einer Wärmedämmschicht 42 versehen ist. Der zweite Raum 14 ist ebenfalls durch eine Außenwandung 34 definiert, welche innenseitig mit einer konventionellen Wärmedämmschicht 44 beschichtet ist, wobei hier im Unterschied zu der Außenwandung 36 des ersten Raums 12 die Außenwandung 34 des zweiten Raums 14 nicht nach innen verspiegelt ist, wobei eine derartige Verspiegelung aber vorgesehen sein kann.

Die Kammer 16 ist mit einer Vielzahl an hohlen Wärmeabgaberohren 24 durchsetzt, welche mit ihren jeweiligen beiden Enden in den ersten Raum 12 münden. An den Stellen, an denen die Wärmeabgaberohre 24 durch den doppelwandigen Kammermantel 30 hindurch in den ersten Raum 12 münden, sind jeweils Spiegel 46 vorgesehen, welche derart angeordnet und ausgebildet sind, dass von dem Quellmedium 18 über die Wärmeabgaberohre 24 abgegebene Wärmestrahlung zurück in Richtung des jeweiligen Wärmeabgaberohrs 24 reflektiert wird.

In der dargestellten Ausführungsform münden in die Kammer 16 bzw. das darin befindliche Quellmedium zwei Heizrohre 26, 28 ein, über die sich dem Quellmedium 18 Wärmeenergie zuführen lässt. Beispielsweise kann sich im Inneren des Heizrohrs 26 im Einbindungsbereich desselben in das Quellmedium 18 eine Heizwendel (nicht dargestellt) erstrecken, welche sich durch Zufuhr elektrischer Energie von beispielsweise einer Fotovoltaikanlage erwärmt, so dass die zugeführte elektrische Energie an das Quellmedium 18 abgegeben wird. Zusätzlich kann über das zweite Heizrohr 28 das Quellmedium 18 durch Verbrennung fossiler Brennstoffe wie beispielsweise Gas oder Öl erwärmt werden, indem die Brennflamme über das zweite Heizrohr 28 direkt in das Quellmedium 18 seine Wärme einträgt. Die Heizrohre 26, 28 sind außerhalb der Kammer 16 mit einer Wärmedämmschicht wie beispielsweise einem Keramikisolator 50 und einer Spiegelschicht versehen, um einen Wärmeaustausch mit dem ersten Raum 12, dem zweiten Raum 14 sowie mit der Außenatmosphäre zu unterbinden.

In dem ersten Raum 12 befindet sich ein erster gewendelter Rohrabschnitt 20, dessen Wendel sich konzentrisch um die Kammer 16 herum erstreckt. In dem zweiten Raum 14 erstreckt sich ein zweiter gewendelter Rohrabschnitt 22, dessen Wendel sich konzentrisch um den ersten Raum 12 herum erstreckt. Der erste Rohrabschnitt 20 ist mit dem zweiten Rohrabschnitt 22 verbunden, so dass ein Zielmedium über einen Rücklauf 52 in den zweiten Rohrabschnitt 22 eingespeist werden kann, um über den zweiten Rohrabschnitt 22 und den ersten Rohrabschnitt 20 zu einem Vorlauf 54 gefördert zu werden. Für den Fall einer etwaigen Störung ist zur Sicherheit außerhalb des zweiten Raums 14 in dem die beiden Rohrabschnitte 20, 22 verbindenden Rohrabschnitt ein Ausgleichsgefäß oder ein Sicherheitsventil 48 angeordnet, um damit einen etwaigen Überdruck aus dem Rohrsystem 20, 22 ausgleichen zu können. Der erste Rohrabschnitt 20 und der zweite Rohrabschnitt 22 können eine schwarze Oberfläche aufweisen, um das Wärmeabsorptionsverhalten dieser Rohrabschnitte 20, 22 zu verbessern.

Der erste Raum 12 ist über ein erstes Druckrohr 56 mit dem Rohrsystem 100 verbunden. In entsprechender Weise ist der zweite Raum 14 über ein zweites Druckrohr 58 mit dem Rohrsystem 100 verbunden. Der erste Raum 12 steht somit über das Rohrsystem 100 mit dem zweiten Raum 14 in kommunizierender Verbindung.

Das Rohrsystem 100 weist drei parallele Strömungspfade 102, 104 und 106 auf, wobei in dem Strömungspfad 102 ein Druckausgleichsventil 108 angeordnet ist, welches nach seiner Betätigung sowohl eine Strömung von dem ersten Raum 12 in den zweiten Raum 14 als auch eine Strömungsrichtung von dem zweiten Raum 14 zu dem ersten Raum 12 ermöglicht. In dem zweiten Strömungspfad 104 ist eine Pumpe 110 vorgesehen, mit der sich eine Strömung von dem zweiten Raum 14 in den ersten Raum 12 erzeugen lässt. In dem dritten Strömungspfad 106 ist eine Pumpe 112 vorgesehen, mit der sich eine Strömung von dem ersten Raum 12 in den zweiten Raum 14 erzeugen lässt. Darüber hinaus sind in dem zweiten Strömungspfad 104 und in dem dritten Strömungspfad 106 beiderseits der Pumpen 110 bzw. 112 Ventile 114 angeordnet, um eine Strömung in den Strömungspfaden 104 und 106 effektiv zu unterbinden.

Im Folgenden wird nun die Funktionsweise des erfindungsgemäßen Wärmetauschers 10 erläutert. Zunächst sei angenommen, dass der erste Raum 12 durch Betätigen der Pumpe 112 nach Öffnen der Ventile 114 zumindest teilweise evakuiert, und somit das zuvor in dem ersten Raum 12 befindliche Arbeitsgas, beispielsweise Argon, in den zweiten Raum 14 gepumpt wurde. Im idealen Falle ist der erste Raum 12 dann vollkommen evakuiert, so dass darin ein Vakuum herrscht. Wenn dieser Zustand erreicht ist, wird damit begonnen, das in der Kammer 16 befindliche Quellmedium 18 über das erste Heizrohr 26 und/oder das zweite Heizrohr 28 aufzuheizen. Hierzu kann beispielsweise eine in dem ersten Heizrohr 26 befindliche Heizwendel durch Zufuhr elektrischer Energie aufgeheizt werden. Ergänzend oder alternativ dazu kann über das zweite Heizrohr 28 eine Brennerflamme direkt in das Quellmedium 18 eingespeist werden, um auf diese Weise das Quellmedium 18 zu erhitzen.

Dadurch, dass das Quellmedium 18 in dem doppelwandigen Kammermantel 32, 38 mit der eingelagerten Wärmedämmschicht 40 eingekapselt ist, geht über den Kammermantel 32, 38 nur ein unwesentlicher Anteil der auf diese Weise in das Quellmedium 18 eingespeisten Wärmeenergie verloren. Insbesondere wird die Wärmeübertragung durch Wärmeleitung durch die Wärmedämmschicht 40 behindert, so dass sich die Außenwandung 32 nur geringfügig erwärmt. Andererseits wird eine etwaige Wärmeabstrahlung von der Außenwandung 32 durch ihre Innenverspiegelung effektiv verhindert, indem durch die Verspiegelung der Außenwandung 32 ein derartiger Infrarotstrahlungsanteil zurück auf das Quellmedium 18 reflektiert wird. Auf diese Weise wird effektiv verhindert, dass der gewendelte erste Rohrabschnitt 20 in unerwünschter Weise durch Wärmestrahlung erwärmt wird.

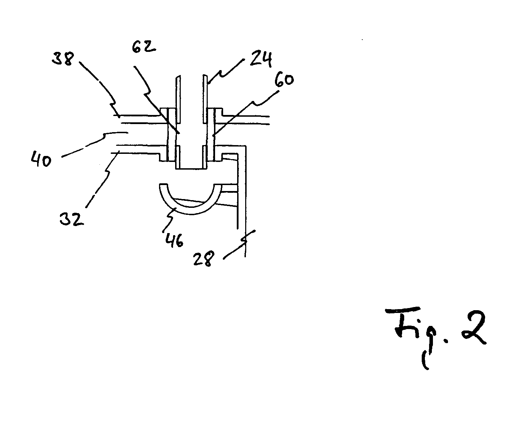

Um den gewendelten ersten Rohrabschnitt 20 bzw. das darin geführte Zielmedium bei Bedarf gezielt und dosiert zu erwärmen, müssen Vorkehrungen getroffen werden, um die Wärmeenergie des Quellmediums 18 gezielt aus der Kammer 16 insbesondere durch Wärmekonvektion und/oder Wärmeleitung herauszuführen. Um dieser Anforderung gerecht zu werden, ist die Kammer 16 mit den Hohlrohren 24 durchsetzt, welche durch entsprechende Öffnungen im Kammermantel 30 in den ersten Raum 12 münden. Die hohlen Wärmeabgaberohre 24 stehen dabei in Wärmetauschbeziehung mit dem Quellmedium 18, so dass sie insbesondere durch Wärmeleitung direkt erwärmt werden. Um jedoch zu verhindern, dass durch die Öffnungen in dem Kammermantel 32, 38 Wärmestrahlungsanteile in den ersten Raum 12 gelangen, sind im Bereich dieser Öffnungen Spiegel 46 vorgesehen (siehe Fig. 2), welche vorzugsweise eine parabolische Gestalt aufweisen können, um derartige Wärmestrahlungsanteile durch die Öffnungen in dem Kammermantel 32, 38 zurück in die Kammer 16 bzw. in die Wärmeabgaberohre 24 zu reflektieren. Um eine Wärmeübertragung von den erwärmten Wärmeabgaberohren 24 auf die Außenwandung 32 der Kammer 16 zu verhindern, sind die Wärmeabgaberohre 24 im Bereich, in dem sie durch den doppelwandigen Kammermantel 32, 38 hindurchtreten, mit einer Isoliermanschette 60 beispielsweise aus einem Keramikmaterial ummantelt (siehe Fig. 2). Die Wärmeabgaberohre 24 können dabei im Bereich des Durchtritts durch den Kammermantel 32, 38 mehrere Durchbrechungen 62 aufweisen, um die Wärmeübertragung weiter zu reduzieren.

Zwar wurden die Wärmeabgaberohre 24 durch das Quellmedium 18 erwärmt, jedoch ist in dem beschriebenen Zustand, in dem der erste Raum 12 idealerweise evakuiert ist, eine Wärmeübertragung durch Konvektion und/oder Wärmeleitung ausgehend von den Wärmeabgaberohren 24 und insbesondere deren Innenmantelflächen auf das in dem gewendelten ersten Rohrabschnitt 20 geführte Zielmedium nicht möglich. Solange daher der erste Raum 12 evakuiert ist, stellt die Kammer 16 mit dem darin befindlichen Quellmedium 18 einen idealen Wärmespeicher dar, so dass das Quellmedium 18 Temperaturen von mehreren 100°C, insbesondere von bis zu 850°C und mehr dauerhaft speichern kann.

Wenn nun von einem Verbraucher wie beispielsweise einer Warmwasserheizung oder einen Warmwasserspeicher für die Brauchwasserversorgung Wärme gefordert wird und somit ein Bedarf danach steht, das Zielmedium in dem ersten gewendelten Rohrabschnitt 20 zu erwärmen, ist es erforderlich, das zuvor in den zweiten Raum 14 gepumpte Arbeitsgas zumindest teilweise zurück in den ersten Raum 12 zu transportieren, so dass darin eine Wärmeübertragung insbesondere durch Konvektion und/oder Wärmeleitung von dem Quellmedium 18 bzw. den erwärmten Wärmeabgaberohren 24 auf den ersten Rohrabschnitt 20 ermöglicht wird. Hierzu kann zunächst das Druckausgleichsventil 108 in dem ersten Strömungspfad 102 geöffnet werden, so dass sich zwischen dem ersten Raum 12 und dem zweiten Raum 14 ein Druckausgleich einstellt. Anschließend wird das Druckausgleichsventil 108 geschlossen, die Pumpe 110 betätigt und anschließend die Ventile 114 geöffnet, so dass der zweite Raum 14 zumindest teilweise evakuiert wird, indem das darin befindliche Arbeitsgas über den zweiten Strömungspfad 114 in den ersten Raum 12 gepumpt wird. Selbstverständlich kann das Arbeitsmedium auch ohne vorheriges Öffnen des Druckausgleichsventils 108 nur durch Betätigung der Pumpe 110 in den ersten Raum gepumpt werden.

Wenn das Arbeitsgas auf diese Weise in den ersten Raum 12 gepumpt wurde, so dass dieser nun unter einem bestimmten Druck steht, erfolgt der Wärmetransport von dem Quellmedium 18 bzw. den Wärmeabgaberohren 24 auf den gewendelten ersten Rohrabschnitt 20 bzw. auf das darin strömende Zielmedium. Da die Wärmeabgaberohre 24 im Inneren hohl sind und eine Vielzahl an Wärmeabgaberohren 24 vorgesehen ist, steht das in dem ersten Raum 12 nun befindliche Arbeitsgas im Inneren der Wärmeabgaberohre 24 über eine verhältnismäßig große Berührfläche mit den erwärmten Wärmeabgaberohren 24 in Kontakt, so dass das in dem ersten Raum 12 befindliche Arbeitsgas verhältnismäßig schnell erwärmt wird. Da das Arbeitsgas im Bereich des ersten gewendelten Rohrabschnitts 20 kühler ist als im Bereich der Wärmeabgaberohre 24, entsteht ein Temperaturgradient, so dass auf diese Weise eine Wärmeübertragung von den Wärmeabgaberohren 24 in Richtung des gewendelten ersten Rohrabschnitts 20 durch Konvektion erfolgt. Darüber hinaus erfolgt in dem Arbeitsgas eine Wärmeübertragung durch Wärmeleitung.

Um etwaige Wärmeverluste des ersten Raums 12 zu verhindern, ist die Außenwandung 36 des ersten Raums 12 innenseitig mit der Wärmedämmschicht 42 versehen, so dass die Außenwandung 36 eine gegenüber dem in dem ersten Raum 12 befindlichen Arbeitsgas eine wesentlich geringere Temperatur aufweist. Um eine etwaige Wärmeabstrahlung von der Außenwandung 36 zu verhindern, ist die Außenwandung 36 darüber hinaus nach innen hin verspiegelt. Hinzu kommt, dass, solange der erste Raum 12 das Arbeitsgas enthält, der zweite Raum 14 unter einem geringeren Innendruck steht oder sogar weitestgehend evakuiert ist, so dass der den ersten Raum 12 umgebende zweite Raum 14 den ersten Raum 12 thermisch isoliert.

Wenn nun kein Bedarf mehr danach besteht, das Zielmedium, welches durch den ersten Rohrabschnitt 20 und den zweiten Rohrabschnitt 22 strömt, in dem ersten Rohrabschnitt 20 zu erwärmen, kann beispielsweise zunächst die Strömung des Zielmediums durch die beiden Rohrabschnitt 20, 22 unterbrochen und das während der Erwärmungsphase im ersten Raum 12 befindliche Arbeitsgas zurück in den zweiten Raum 14 gepumpt werden, um den ersten Raum 12 weitestgehend, im Idealfall vollständig zu evakuieren. Hierzu kann zunächst wiederum das Druckausgleichsventil 108 in dem ersten Strömungspfad 102 geöffnet werden, so dass sich zwischen dem ersten Raum 12 und dem zweiten Raum 14 ein Druckausgleich einstellt. Sobald dieser Zustand erreicht ist, wird anschließend das Ventil 108 geschlossen, die Pumpe 112 betätigt und anschließend die im dritten Strömungspfad 106 befindlichen Ventile 114 geöffnet, so dass das Arbeitsmedium aus dem ersten Raum 12 in den zweiten Raum 14 gepumpt wird. Wenn der erste Raum 12 evakuiert ist, werden abschließend die in dem dritten Strömungspfad 106 befindlichen Ventile 114 geschlossen. Anstelle zuerst einen Druckausgleich zwischen den beiden Räumen 12, 14 durch Öffnen des Druckausgleichsventil 108 herzustellen, ist es auch hier möglich, das Arbeitsmedium allein durch Betätigung der Pumpe 112 aus dem ersten Raum 12 in den zweiten Raum 14 zu pumpen.

Da nun der erste Raum 12 wieder evakuiert ist, findet keine Wärmeübertragung von den Wärmeabgaberohren 24 auf den gewendelten ersten Rohrabschnitt 20 mehr statt. Allerdings befindet sich nun das zuvor erwärmte Arbeitsgas in dem zweiten Raum 14, so dass es dort nun das in dem gewendelten zweiten Rohrabschnitt 22 befindliche Zielmedium vortemperieren kann, bevor es in einem weiteren Aufheizvorgang in dem ersten Raum 12 erwärmt wird.

Indem das Zielmedium auf diese Weise in dem zweiten Rohrabschnitt 22 vortemperiert wird, weist es, wenn es in einem anschließenden Aufwärmvorgang durch den ersten Rohrabschnitt 20 geleitet wird, gegenüber dem Wärmeabgaberohr 24 bzw. dem Quellmedium 18 eine geringere Temperaturdifferenz als in einem nicht vortemperierten Zustand auf, so dass während des Aufwärmvorgangs dem Quellmedium 18 weniger Wärmeenergie entzogen wird, um das Zielmedium auf einen Zielwert zu erwärmen.

Durch den Austausch des Arbeitsgases zwischen dem ersten Raum 12 und dem zweiten Raum 14 lässt sich somit die in das Quellmedium 18 eingespeiste Wärmeenergie optimal nutzen. Insbesondere geht die in das Arbeitsgas eingetragene Wärmeenergie nicht verloren, da sie in der vorbeschriebenen Art und Weise zur Vortemperierung des Zielmediums in dem zweiten Rohrabschnitt 22 verwendet werden kann.

Bei dem erfindungsgemäßen Wärmetauscher handelt es sich somit um ein in sich geschlossenes System, welches die eingetragene Wärmeenergie optimal ohne nennenswerte Wärmeverluste speichert und zur Erwärmung eines Zielmediums verwendet.

### Bezugszeichenliste

- 10: Wärmetauscher
- 12: erster Raum
- 14: zweiter Raum
- 16: Kammer
- 18: Quellmedium
- 20: erster Rohrabschnitt
- 22: zweiter Rohrabschnitt
- 24: Wärmeabgaberohr
- 26: erstes Heizrohr
- 28: zweites Heizrohr
- 30: doppelwandiger Kammermantel von 16
- 32: verspiegelte Außenwandung von 16
- 34: Außenwandung von 14
- 36: Außenwandung von 12
- 38: Innenwandung von 16
- 40: Wärmedämmschicht von 30
- 42: Wärmedämmschicht von 36
- 44: Wärmedämmschicht von 34
- 46: Spiegel
- 48: Druckausgleichsventil
- 50: Keramikisolator mit Spiegelschicht
- 52: Rücklauf
- 54: Vorlauf
- 56: erstes Druckrohr
- 58: zweites Druckrohr
- 60: Isoliermanschette
- 62: Durchbrechung
- 100: Rohrsystem
- 102: erster Strömungspfad
- 104: zweiter Strömungspfad
- 106: dritter Strömungspfad
- 108: Druckausgleichsventil
- 110: Pumpeneinheit
- 112: Pumpeneinheit
- 114: Absperrventile

## Patentansprüche

1. Druckgesteuerter Wärmetauscher (10) mit einem Quellmedium (18) und einem Zielmedium, wobei sowohl das Quellmedium (18) als auch das Zielmedium in einem zumindest teilweise evakuierbaren ersten Raum (12) angeordnet sind, dessen Innendruck von einem ersten Druckwert auf einen zweiten Druckwert derart überführbar ist, dass die Wärmeübertragung von dem Quellmedium (18) auf das Zielmedium durch Konvektion und/oder Wärmeleitung über ein in dem ersten Raum (12) befindliches Arbeitsgas in Abhängigkeit von dem Innendruck variiert.

2. Wärmetauscher nach Anspruch 1,
**dadurch gekennzeichnet, dass**
das Quellmedium (18) in einer thermisch isolierten Kammer (16) angeordnet ist, welche zumindest eine Öffnung aufweist, durch die das Quellmedium (18) mit dem Zielmedium insbesondere über Konvektion und/oder Wärmeleitung in Wärmetauschbeziehung steht, wobei im Bereich der Öffnung ein Spiegel (46) vorgesehen ist, welcher derart angeordnet und ausgebildet ist, dass die von dem Quellmedium (18) abgegebene Wärmestrahlung zurück in die Kammer reflektiert wird.

3. Wärmetauscher nach Anspruch 2,
**dadurch gekennzeichnet, dass**
die Kammer (16) mit einer Vielzahl an Rohren (24) durchsetzt ist, welche durch die Öffnungen in den ersten Raum (12) münden, wobei die Rohre (24) in Wärmetauschbeziehung mit dem Quellmedium (18) stehen.

4. Wärmetauscher nach Anspruch 2 oder 3,
**dadurch gekennzeichnet, dass**
die Kammer (16) durch eine nach innen verspiegelte Außenwandung (32) begrenzt ist, wobei zwischen der Außenwandung (32) und dem Quellmedium (18) eine Wärmedämmschicht (40) angeordnet ist.

5. Wärmetauscher nach Anspruch 4,
**dadurch gekennzeichnet, dass**
die Wärmedämmschicht (40) zwischen der Außenwandung (32) und einer Innenwandung (38) angeordnet ist, welche mit dem Quellmedium (18) in Kontakt steht.

6. Wärmetauscher nach zumindest einem der voranstehenden Ansprüche,
**dadurch gekennzeichnet, dass**
das Quellmedium (18) aus einem Material besteht, welches bis auf eine Temperatur von zumindest 850°C zerstörungsfrei erhitzbar ist.

7. Wärmetauscher nach zumindest einem der voranstehenden Ansprüche,
**dadurch gekennzeichnet, dass**
der erste Raum (12) durch eine nach innen verspiegelte Außenwandung (36) begrenzt ist, welche innenseitig mit einer Wärmedämmschicht (42) versehen ist.

8. Wärmetauscher nach zumindest einem der voranstehenden Ansprüche,
**dadurch gekennzeichnet, dass**
das Zielmedium ein Fluid ist, für welches ein erster Rohrabschnitt (20) vorgesehen ist, der sich durch den ersten Raum (12) hindurch erstreckt.

9. Wärmetauscher nach Anspruch 8,
**dadurch gekennzeichnet, dass**
der erste Rohrabschnitt (20) gewendelt um das Quellmedium (18) herum geführt ist, wobei eine das Quellmedium (18) aufnehmende Kammer (16) vorzugsweise eine zylindrische Gestalt aufweist, um die die Rohrwendel (20) konzentrisch herum geführt ist.

10. Wärmetauscher nach zumindest einem der Ansprüche 2 bis 9,
**dadurch gekennzeichnet, dass**
der erste Raum (12) eine zylindrische Gestalt aufweist, wobei die Kammer (16) vorzugsweise konzentrisch zur Außenwandung (36) des ersten Raums (12) in diesem angeordnet ist.

11. Wärmetauscher nach zumindest einem der Ansprüche 8 bis 10,
**dadurch gekennzeichnet, dass**
der erste Rohrabschnitt (20) eine schwarze Oberfläche aufweist.

12. Wärmetauscher nach zumindest einem der voranstehenden Ansprüche,
**dadurch gekennzeichnet, dass**
der Wärmetauscher (10) ferner einen zumindest teilweise evakuierbaren zweiten Raum (14) aufweist, welcher mit dem ersten Raum (12) derart in kommunizierender Verbindung steht, dass infolge einer Druckänderung in dem ersten Raum (12) der Innendruck des zweiten Raums (14) von einem dritten Druckwert zu einem vierten Druckwert überführbar ist.

13. Wärmetauscher nach Anspruch 12,
**dadurch gekennzeichnet, dass**
sich durch den zweiten Raum (14) ein mit dem ersten Rohrabschnitt (20) in kommunizierender Verbindung stehender zweiter Rohrabschnitt (22) erstreckt.

14. Wärmetauscher nach Anspruch 12 oder 13,
**dadurch gekennzeichnet, dass**
der erste Raum (12) in dem zweiten Raum (14) angeordnet ist.

15. Wärmetauscher nach Anspruch 13 oder 14,
**dadurch gekennzeichnet, dass**
der zweite Rohrabschnitt (22) gewendelt um den ersten Raum (12) herum geführt ist, wobei die Rohrwendel (22) vorzugsweise konzentrisch um den ersten Raum (12) herum geführt ist.

16. Wärmetauscher nach zumindest einem der Ansprüche 12 bis 15,
**dadurch gekennzeichnet, dass**
der zweite Raum (14) durch eine Außenwandung (34) begrenzt ist, welche mit einer Wärmedämmschicht (44) versehen ist.

17. Wärmetauscher nach zumindest einem der Ansprüche 13 bis 16,
**dadurch gekennzeichnet, dass**
der zweite Rohrabschnitt (22) eine schwarze Oberfläche aufweist.

18. Wärmetauscher nach zumindest einem der Ansprüche 12 bis 17,
**dadurch gekennzeichnet, dass**
der zweite Raum (14) eine zylindrische Gestalt aufweist, wobei der erste Raum (12) vorzugsweise konzentrisch zur Außenwandung (34) des zweiten Raums (14) in diesem angeordnet ist.

19. Wärmetauscher nach zumindest einem der Ansprüche 12 bis 18,
**dadurch gekennzeichnet, dass**
der erste Raum (12) mit dem zweiten Raum (14) über ein Rohrsystem (100) in kommunizierender Verbindung steht, welches zumindest eine Pumpe (110, 112) aufweist, um unter Verringerung des Drucks in dem ersten Raum (12) den Druck in dem zweiten Raum (14) zu erhöhen oder umgekehrt.

20. Wärmetauscher nach Anspruch 19,
**dadurch gekennzeichnet, dass**
das Rohrsystem (100) ferner ein Druckausgleichsventil (108) aufweist, das im geöffneten Zustand einen Druckausgleich zwischen dem ersten Raum (12) und dem zweiten Raum (14) ermöglicht.

21. Wärmetauscher nach zumindest einem der voranstehenden Ansprüche,
**dadurch gekennzeichnet, dass**
für das Quellmedium (18) eine Heizeinrichtung, insbesondere zumindest ein in das Quellmedium mündendes Heizrohr (26, 28) vorgesehen ist, über welche dem Quellmedium (18) von extern Wärmeenergie zuführbar ist.

22. Wärmetauscher nach zumindest einem der voranstehenden Ansprüche,
**dadurch gekennzeichnet, dass**
eine Steuerung vorgesehen ist, welche eingerichtet ist, um
- die Temperatur des Quellmediums (18) und/oder des Zielmediums zu überwachen,
- die in dem ersten und dem zweiten Raum (12, 14) herrschenden Drücke zu steuern, und/oder
- die Durchflussgeschwindigkeit des Zielmediums durch den ersten und den zweiten Rohrabschnitt (20, 22) zu variieren.

23. Verfahren zum gezielten und dosierten Übertragen von Wärmeenergie von einem Quellmedium (18) auf ein Zielmedium, mit den Schritten:
- Erwärmen des Quellmediums (18) auf einen Zielwert; und
- Steuern des Drucks, welcher in einem ersten Raum (12) herrscht, in dem sich das Quellmedium (18) und das Zielmedium befinden, derart, dass in Abhängigkeit von dem jeweils herrschenden Druck die Wärmeübertragung von dem Quellmedium (18) auf das Zielmedium durch Konvektion und/oder Wärmeleitung über ein in dem ersten Raum (12) befindliches Arbeitsgas variiert.

24. Verfahren nach Anspruch 23,
**dadurch gekennzeichnet, dass**
das Steuern des Drucks umfasst;
- Verringern des Drucks, um die Wärmeübertragungsrate von dem Quellmedium (18) auf das Zielmedium zu verringern; und/oder
- Erhöhen des Drucks, um die Wärmeübertragungsrate von dem Quellmedium (18) auf das Zielmedium zu erhöhen.

25. Verfahren nach Anspruch 24,
**dadurch gekennzeichnet, dass**
das Verringern des Drucks in dem ersten Raum (12) erfolgt, indem der Druck in einem mit dem ersten Raum (12) in kommunizierender Verbindung stehenden zweiten Raum (14) erhöht wird, und dass das Erhöhen des Drucks in dem ersten Raum (12) erfolgt, indem der Druck in dem zweiten (14) Raum verringert wird.

26. Verfahren nach zumindest einem der Ansprüche 23 bis 25, mit dem weiteren Schritt:
- Hindurchleiten des Zielmediums durch den ersten und den zweiten Raum (12, 14).

27. Verfahren nach Anspruch 25 oder 26, mit dem weiteren Schritt:
- Vortemperieren des Zielmediums in dem zweiten Raum (14), indem das in dem ersten Raum (12) erwärmte Arbeitsmedium aus dem ersten Raum (12) in den zweiten Raum (14) überführt wird.

28. Wärmeversorgungssystem mit zumindest einem Verbraucher, insbesondere einer Warmwasserheizung oder einem Warmwasserspeicher für die Brauchwasserversorgung, und einem Wärmetauscher (10) gemäß einem der Ansprüche 1 bis 22, wobei das von dem Wärmetauscher (10) gezielt durch Variation des Innendrucks des ersten Raums (12) erwärmte Zielmedium dem zumindest einen Verbraucher zuführbar ist.

## Claims

1. A pressure controlled heat exchanger (10) having a source medium (18) and a target medium, wherein both the source medium (18) and the target medium are arranged in a first space (12) which can be at least partly evacuated and whose internal pressure can be converted from a first pressure value to a second pressure value such that the heat transfer from the source medium (18) to the target medium by convection and/or heat conduction varies in dependence on the internal pressure via a working gas located in the first space (12).

2. A heat exchanger in accordance with claim 1,
**characterised in that**
the source medium (18) is arranged in a thermally insulated chamber (16) which has at least one opening through which the source medium (18) is in a heat exchanging relationship with the target medium, in particular via convection and/or heat conduction, with a mirror (46) being provided in the region of the opening which is arranged and designed such that the thermal radiation output by the source medium (18) is reflected back into the chamber.

3. A heat exchanger in accordance with claim 2,
**characterised in that**
the chamber (16) is filled with a plurality of tubes (24) which open through the openings into the first space (12), with the tubes (24) being in heat exchanging relationship with the source medium (18).

4. A heat exchanger in accordance with claim 2 or claim 3,
**characterised in that**
the chamber (16) is bounded by an inwardly mirror coated outer wall (32), with a thermal barrier coating (40) being arranged between the outer wall (32) and the source medium (18).

5. A heat exchanger in accordance with claim 4,
**characterised in that**
the thermal barrier coating (40) is arranged between the outer wall (32) and an inner wall (38) which is in contact with the source medium (18).

6. A heat exchanger in accordance with at least one of the preceding claims,
**characterised in that**
the source medium (18) comprises a material which can be heated free of destruction up to a temperature of at least 850°C.

7. A heat exchanger in accordance with at least one of the preceding claims,
**characterised in that**
the first space (12) is bounded by an inwardly mirror coated outer wall (36) which is provided with a thermal barrier coating (42) at the inner side.

8. A heat exchanger in accordance with at least one of the preceding claims,
**characterised in that**
the target medium is a fluid for which a first tubular section (20) is provided which extends through the first space (12).

9. A heat exchanger in accordance with claim 8,
**characterised in that**
the first tubular section (20) is guided around the source medium (18) in coiled form, with a chamber (16) receiving the source medium (18) preferably having a cylindrical shape around which the coiled tube (20) is guided concentrically.

10. A heat exchanger in accordance with at least one of the claims 2 to 9,
**characterised in that**
the first space (12) has a cylindrical shape, with the chamber (16) preferably being arranged in the first space (12) concentrically to the outer wall (36) thereof.

11. A heat exchanger in accordance with at least one of the claims 8 to 10,
**characterised in that**
the first tubular section (20) has a black surface.

12. A heat exchanger in accordance with at least one of the preceding claims,
**characterised in that**
the heat exchanger (10) furthermore has a second space (14) which can be at least partly evacuated and which is in communicating connection with the first space (12) such that the internal pressure of the second space (14) can be converted from a third pressure value to a fourth pressure value as a consequence of a pressure variation in the first space (12).

13. A heat exchanger in accordance with claim 12,
**characterised in that**
a second tubular section (22) in communicating connection with the first tubular section (20) extends through the second space (14).

14. A heat exchanger in accordance with claim 12 or claim 13,
**characterised in that**
the first space (12) is arranged in the second space (14).

15. A heat exchanger in accordance with claim 13 or claim 14,
**characterised in that**
the second tubular section (22) is guided around the first space (12) in coiled form, with the coiled tube (22) preferably being guided concentrically around the first space (12).

16. A heat exchanger in accordance with at least one of the claims 12 to 15,
**characterised in that**
the second space (14) is bounded by an outer wall (34) which is provided with a thermal barrier coating (44).

17. A heat exchanger in accordance with at least one of the claims 13 to 16,
**characterised in that**
the second tubular section (22) has a black surface.

18. A heat exchanger in accordance with at least one of the claims 12 to 17,
**characterised in that**
the second space (14) has a cylindrical shape, with the first space (12) preferably being arranged in the second space (14) concentrically to the outer wall (34) thereof.

19. A heat exchanger in accordance with at least one of the claims 12 to 18,
**characterised in that**
the first space (12) is in communicating connection with the second space (14) via a tubular system (100) which has at least one pump (110, 112) to increase the pressure in the second space (14) while reducing the pressure in the first space (12) or vice versa.

20. A heat exchanger in accordance with claim 19,
**characterised in that**
the tubular system (100) furthermore has a pressure equalising valve (108) which enables a pressure equalisation between the first space (12) and the second space (14) in the open state.

21. A heat exchanger in accordance with at least one of the preceding claims,
**characterised in that**
a heating device, in particular at least one heating tube (26, 28) opening into the source medium, is provided for the source medium (18) and thermal energy can be supplied to the source medium (18) from external via it.

22. A heat exchanger in accordance with at least one of the preceding claims,
**characterised in that**
a control is provided which is configured to
- monitor the temperature of the source medium (18) and/or of the target medium;
- control the pressures present in the first and second spaces (12, 14); and/or
- to vary the throughflow speed of the target medium through the first and second tubular sections (20, 22).

23. A method for the direct and metered transfer of thermal energy from a source medium (18) to a target medium, comprising the steps:
- heating the source medium (18) to a target value; and
- controlling the pressure which is present in a first space (12) in which the source medium (18) and the target medium are located such that the heat transfer from the source medium (18) to the target medium by convection and/or thermal conduction varies in dependence on the respective prevailing pressure via a working gas located in the first space (12).

24. A method in accordance with claim 23,
**characterised in that**
the controlling of the pressure includes:
- reducing the pressure to reduce the heat transfer rate from the source medium (18) to the target medium; and/or
- increasing the pressure to increase the heat transfer rate from the source medium (18) to the target medium.

25. A method in accordance with claim 24,
**characterised in that**
the reduction of the pressure in the first space (12) takes place **in that** the pressure in a second space (14) in communicating connection with the first space (12) is increased; and **in that** the increasing of the pressure in the first space (12) takes place **in that** the pressure in the second space (14) is reduced.

26. A method in accordance with at least one of the claims 23 to 25, comprising the further step:
- conducting the target medium through the first and second spaces (12, 14).

27. A method in accordance with claim 25 or claim 26, comprising the further step:
- presetting of the temperature of the target medium in the second space (14) in that the working medium heated in the first space (12) is transferred from the first space (12) into the second space (14).

28. A heat supply system having at least one consumer, in particular a hot water heater or a hot water reservoir for process water supply, and having a heat exchanger (10) in accordance with any one of the claims 1 to 22, wherein the target medium heated by the heat exchanger (10) directly by variation of the internal pressure of the first space (12) can be supplied to the at least one consumer.

## Revendications

1. Échangeur de chaleur commandé en pression (10) avec un milieu source (18) et un milieu cible, dans lesquels aussi bien le milieu source (18) que le milieu cible sont agencés dans un premier compartiment (12) susceptible d'être au moins partiellement évacué, dont la pression intérieure peut être amenée depuis une première valeur de pression jusqu'à une seconde valeur de pression de telle façon que le transfert de chaleur du milieu source (18) au milieu cible par convection et/ou par conduction thermique via un gaz de travail qui se trouve dans le premier compartiment (12) varie en fonction de la pression intérieure.

2. Échangeur de chaleur selon la revendication 1,
**caractérisé en ce que** le milieu source (18) est agencé dans une chambre isolée thermiquement (16), laquelle comporte au moins une ouverture à travers laquelle le milieu source (18) se trouve en relation d'échange de chaleur avec le milieu cible, en particulier par convection et/ou par conduction thermique, et dans la région de l'ouverture il est prévu un miroir (46), agencé et réalisé de telle façon que le rayonnement thermique dégagé par le milieu source (18) est réfléchi en retour dans la chambre.

3. Échangeur de chaleur selon la revendication 2,
**caractérisé en ce que** la chambre (16) est traversée par une pluralité de tubes (24) qui débouchent dans le premier compartiment (12) à travers les ouvertures, et les tubes (24) se trouvent en relation d'échange de chaleur avec le milieu source (18).

4. Échangeur de chaleur selon la revendication 2 ou 3,
**caractérisé en ce que** la chambre (16) est limitée par une paroi extérieure (32) spécularisée vers l'intérieur, et une couche d'amortissement thermique (40) est agencée entre la paroi extérieure (32) et le milieu source (18).

5. Échangeur de chaleur selon la revendication 4,
**caractérisé en ce que** la couche d'amortissement thermique (40) est agencée entre la paroi extérieure (32) et une paroi intérieure (38), laquelle est en contact avec le milieu source (18).

6. Échangeur de chaleur selon l'une au moins des revendications précédentes,
**caractérisé en ce que** le milieu source (18) est en un matériau qui est susceptible d'être chauffé sans destruction jusqu'à une température d'au moins 850° C.

7. Échangeur de chaleur selon l'une au moins des revendications précédentes,
**caractérisé en ce que** le premier compartiment (12) est limité par une paroi extérieure (36) spécularisée vers l'intérieur, laquelle est dotée du côté intérieur d'une couche d'amortissement thermique (42).

8. Échangeur de chaleur selon l'une au moins des revendications précédentes,
**caractérisé en ce que** le milieu cible est un fluide pour lequel il est prévu un premier tronçon de tube (20) qui s'étend à travers le premier compartiment (12).

9. Échangeur de chaleur selon la revendication 8,
**caractérisé en ce que** le premier tronçon de tube (20) est guidé en spirale autour du milieu source (18), et une chambre (16) qui reçoit le milieu source (18) présente de préférence une configuration cylindrique autour de laquelle la spirale tubulaire (20) est guidée de manière concentrique.

10. Échangeur de chaleur selon l'une au moins des revendications 2 à 9,
**caractérisé en ce que** le premier compartiment (12) présente une configuration cylindrique, et la chambre (16) est agencée dans le premier compartiment (12), de préférence de manière concentrique à la paroi extérieure (36) de celui-ci.

11. Échangeur de chaleur selon l'une au moins des revendications 8 à 10,
**caractérisé en ce que** le premier tronçon tubulaire (20) présente une surface noire.

12. Échangeur de chaleur selon l'une au moins des revendications précédentes,
**caractérisé en ce que** l'échangeur de chaleur (10) comprend en outre un second compartiment (14) susceptible d'être au moins partiellement évacué, lequel est en liaison de communication avec le premier compartiment (12) de telle façon qu'à la suite d'une variation de pression dans le premier compartiment (12), la pression intérieure du second compartiment (14) peut être transférée depuis une troisième valeur de pression jusqu'à une quatrième valeur de pression.

13. Échangeur de chaleur selon la revendication 12,
**caractérisé en ce qu'**un second tronçon de tube (22), en liaison de communication avec le premier tronçon de tube (20), s'étend à travers le second compartiment (14).

14. Échangeur de chaleur selon la revendication 12 ou 13,
**caractérisé en ce que** le premier compartiment (12) est agencé dans le second compartiment (14).

15. Échangeur de chaleur selon la revendication 13 ou 14,
**caractérisé en ce que** le second tronçon de tube (22) est guidé en spirale tout autour du premier compartiment (12), et la spirale tubulaire (22) est de préférence guidée de manière concentrique tout autour du premier compartiment (12).

16. Échangeur de chaleur selon l'une au moins des revendications 12 à 15,
**caractérisé en ce que** le second compartiment (14) est limité par une paroi extérieure (34), laquelle est pourvue d'une couche d'amortissement thermique (44).

17. Échangeur de chaleur selon l'une au moins des revendications 13 à 16,
**caractérisé en ce que** le second tronçon tubulaire (22) présente une surface noire.

18. Échangeur de chaleur selon l'une au moins des revendications 12 à 17,
**caractérisé en ce que** le second compartiment (14) présente une configuration cylindrique, et le premier compartiment (12) est agencé dans le second compartiment (14), de préférence de manière concentrique à la paroi extérieure (34) de celui-ci.

19. Échangeur de chaleur selon l'une au moins des revendications 12 à 18,
**caractérisé en ce que** le premier compartiment (12) et en liaison de communication avec le second compartiment (14) via un système de tubes (100), lequel comprend au moins une pompe (110, 112) destinée à augmenter la pression dans le second compartiment (14) en diminuant la pression dans le premier compartiment (12), ou inversement.

20. Échangeur de chaleur selon la revendication 19,
**caractérisé en ce que** le système de tube (100) comprend en outre une soupape de compensation de pression (108) qui permet, dans la situation ouverte, une égalisation de pression entre le premier compartiment (12) et le second compartiment (14).

21. Échangeur de chaleur selon l'une au moins des revendications précédentes,
**caractérisé en ce qu'**il est prévu pour le milieu source (18) un dispositif de chauffage, en particulier au moins un tube chauffant (26, 28) qui débouche dans le milieu source et via lequel de l'énergie thermique peut être amenée depuis l'extérieur au milieu source (18).

22. Échangeur de chaleur selon l'une au moins des revendications précédentes,
**caractérisé en ce qu'**il est prévu une commande, laquelle est réalisée
- pour surveiller la température du milieu source (18) et/ou du milieu cible,
- pour commander les pressions qui règnent dans le premier compartiment et le second compartiment (12, 14), et/ou
- pour faire varier la vitesse d'écoulement du milieu cible à travers le premier et le second tronçon tubulaire (20, 22).

23. Procédé pour transférer de manière ciblée et dosée de l'énergie thermique depuis un milieu source (18) vers un milieu cible, comprenant les étapes consistant à :
- faire chauffer le milieu source (18) jusqu'à une valeur cible ; et
- commander la pression qui règne dans un premier compartiment (12) dans lequel se trouve le milieu source (18) et le milieu cible, de telle façon que le transfert de chaleur du milieu source (18) au milieu cible par convection et/ou par conduction thermique via un gaz de travail qui se trouve dans le premier compartiment (12) varie en fonction de la pression respectivement régnante.

24. Procédé selon la revendication 23,
**caractérisé en ce que** l'étape de commande de la pression inclut :
- une réduction de la pression afin de réduire la vitesse de transmission thermique du milieu source (18) au milieu cible, et/ou
- une augmentation de la pression afin d'augmenter la vitesse de transmission thermique du milieu source (18) au milieu cible.

25. Procédé selon la revendication 24,
**caractérisé en ce que** la diminution de la pression dans le premier compartiment (12) a lieu du fait que l'on augmente la pression dans un second compartiment (14) qui se trouve en liaison de communication avec le premier compartiment (12), et **en ce que** l'augmentation de la pression dans le premier compartiment (12) a lieu du fait que l'on réduit la pression dans le second compartiment (14).

26. Procédé selon l'une au moins des revendications 23 à 25, comprenant l'étape supplémentaire consistant à :
- faire passer le milieu cible à travers le premier et le second compartiment (12, 14).

27. Procédé selon la revendication 25 26, comprenant l'étape supplémentaire consistant à :
- effectuer une températion préliminaire du milieu cible dans le second compartiment (14) en transférant le milieu de travail, chauffé dans le premier compartiment (12), hors du premier compartiment (22) vers le second compartiment (14).

28. Système d'alimentation thermique comprenant au moins un dispositif consommateur, en particulier un chauffage pour eau chaude ou un accumulateur d'eau chaude pour l'alimentation en eau, et un échangeur de chaleur (10) selon l'une des revendications 1 à 22, et le milieu cible, réchauffé par l'échangeur de chaleur (10) de façon ciblée par variation de la pression intérieure du premier compartiment (12), est susceptible d'être amené audit au moins un dispositif consommateur.
